# EUROPÄISCHE PATENTSCHRIFT

(11) **EP 1 140 589 B1**
(45) Veröffentlichungstag und Bekanntmachung des Hinweises auf die Patenterteilung: **05.04.2006**
(21) Anmeldenummer: 00982996.1
(22) Anmeldetag: 12.10.2000
(51) Int. Cl.: B60S 1/38

(54) **WISCHBLATT FÜR EINE SCHEIBE EINES FAHRZEUGS UND VERFAHREN ZUR HERSTELLUNG EINER DREHBAREN VERBINDUNG AN EINEM WISCHBLATT**
WIPER BLADE FOR A GLASS PANE OF A MOTOR VEHICLE AND A METHOD FOR PRODUCING A ROTATABLE CONNECTION ON A WIPER BLADE
RACLETTE D'ESSUIE-GLACE POUR UNE VITRE DE VEHICULE AUTOMOBILE ET PROCEDE POUR LA PRODUCTION D'UN RACCORD PIVOTANT SUR UNE RACLETTE D'ESSUIE-GLACE

(30) Priorität: 15.10.1999 DE 19949687
(43) Veröffentlichungstag der Anmeldung: 10.10.2001
(73) Patentinhaber: ROBERT BOSCH GMBH, 70442 Stuttgart (DE)
(72) Erfinder: CRIEL, Paul, B-3800 St. Truiden (BE)
(74) Vertreter: Gleiss & Grosse
(86) Internationale Anmeldenummer: PCT/DE2000/003603
(87) Internationale Veröffentlichungsnummer: WO 2001/026941

(56) Entgegenhaltungen:
- EP-A- 0 267 010
- EP-A- 0 405 837
- GB-A- 2 048 658
- US-A- 4 675 934

## Beschreibung

Die Erfindung betrifft ein Wischblatt für eine Scheibe eines Fahrzeugs entsprechend dem einleitenden Teil des Anspruchs 1 (siehe z.B. EP-A-0276100 oder US-A-4675934).

### Stand der Technik

Es sind bereits verschiedene Ausführungsformen von Wischblättern für Fahrzeugscheiben bekannt. Diese bekannten Wischblätter weisen ein mehrgliedriges Gestell auf, welches wenigstens einen übergeordneten und einen untergeordneten Bügel aufweist, welche mittels eines elastisch biegbaren und zwischenangeordneten Gelenkstücks zueinander drehbar beziehungsweise schwenkbar verbunden sind. Sowohl die zwei Bügel als auch das Gelenkstück sind im wesentlichen U-förmig ausgebildet.

In EP-0 709 267 ist eine Wischvorrichtung für Scheiben von Kraftfahrzeugen offenbart, bei welchem eine Drehverbindung zwischen einem übergeordneten und untergeordneten Bügel mittels Zwischenschaltung eines biegbaren Gelenkstücks erhalten wird. Das Gelenkstück ist derart ausgebildet, daß es mit dem übergeordneten Bügel mittels an den Außenseiten seiner U-Schenkel angeordneter Rastmittel mit dem übergeordneten Bügel verrastbar ist und mittels an den Innenseiten seiner U-Schenkel angeordneter Gelenkvorsprünge mit dem untergeordneten Bügel drehbar verbunden werden kann. Dabei kann nachteilhafterweise die Verbindung zwischen übergeordneten und untergeordneten Bügel lediglich in einer bestimmten Montagestellung der beiden Bügel beziehungsweise von Anteilen der beiden Bügel zueinander erfolgen. Nach der Herstellung einer Verbindung zwischen den zwei Bügeln müssen Selbige beziehungsweise deren Anteile aus der Montagestellung in eine definierte Betriebsstellung gebracht werden. Die Notwendigkeit, die zwei Bügel zur Herstellung einer Verbindung in einer Montagestellung anordnen zu müssen und nach Herstellung dieser Verbindung Selbige in eine Betriebsstellung bringen zu müssen, führt zu dem Nachteil, daß sowohl in Bezug auf das Montageverfahren als auch in Bezug auf die Montagemittel zeit- und kostenaufwendige Vorkehrungen vorzusehen sind. Die Lösung gemäß EP-0 709 267 ist somit kompliziert und in Bezug auf das Herstellungsverfahren und die Herstellungsmittel störungsanfällig.

Aus der EP-A-0 276 010 ist ein Wischblatt mit einem Gelenkstück bekannt, dessen Gelenkvorsprung an eine elastische Zunge angeordnet ist. Wird das Gelenkstück einem inneren Bügel zugeordnet, so treten elastische Zungen in Ausnehmungen des inneren Bügels ein, um das Aufschnappen eines eines äußeren Bügels zu ermöglichen. Die genannten Ausnehmungen bringen eine Materialschwächung mit sich.

### Vorteile der Erfindung

Das erfindungsgemäße Wischblatt ist entsprechend Anspruch 1 dadurch gekennzeichnet, dass im Bereich des Gelenkvorsprungs zwischen einem Schenkel des ersten Bügels und einem diesem gegenüberstehenden Schenkel des Gelenkstücks ein Spalt ausgebildet ist. Unter elastischer Bewegbarkeit des Gelenkstücks im Bereich des Gelenkvorsprungs wird eine entsprechende Bewegung gegen eine sich einstellende elastische Rückstellkraft verstanden, wobei diese Rückstellkraft in Abhängigkeit von materialspezifischen Eigenschaften des Gelenkstücks (elastischer Vorsprung) aufbauen kann beziehungsweise als elastische, gegen eine Bewegung des Gelenkstücks im Bereich des Gelenkvorsprungs wirkende Kraft eines zum Beispiel separaten mit dem Gelenkvorsprung in Wirkverbindung stehenden Federelements gekennzeichnet sein kann. Dadurch, daß das Gelenkstück nach dessen Befestigung mit dem ersten Bügel im Bereich des Gelenkvorsprungs elastisch bewegbar und vorzugsweise elastisch verformbar, das heißt gegen eine materialspezifische, elastische Rückstellkraft biegbar ist, ist eine unproblematische Herstellung der Drehverbindung des Gelenkstücks mit dem zweiten Bügel zum Beispiel mittels eines Einrastens des Gelenkvorsprungs in eine entsprechende Aufnahme möglich. Hierbei ist es nicht notwendig, zwischen einer Montagestellung und einer Betriebsstellung des ersten und zweiten Bügels zu unterscheiden, da beide Bügel zur Herstellung der Drehverbindung in einer beliebigen Stellung zueinander angeordnet sein können. Der Montageaufwand, insbesondere zur Herstellung der Drehverbindung zwischen dem Gelenkstück und dem zweiten Bügel ist somit verhältnismäßig gering, da keine spezielle Montagestellung der zwei Bügel vorgesehen sein muß, sondern Selbige in einer in Bezug auf die Montage besonders günstigen Position angeordnet werden können. Ferner sind die zwei Bügel und das Gelenkstück fertigungstechnisch verhältnismäßig einfach herzustellen. Nach der Befestigung befindet sich zwischen dem Gelenkstück im Bereich des Gelenkvorsprungs und dem ersten Bügel ein Spalt. Durch die Vorsehung eines Spalts im Bereich des Gelenkvorsprungs zwischen einem Schenkel des ersten Bügels und einem diesem gegenüberstehenden Schenkel des Gelenkstücks läßt sich in besonders einfacher und zuverlässiger Weise eine elastische Bewegbarkeit des Gelenkstücks im Bereich des Gelenkvorsprungs zur Herstellung der Drehverbindung mit dem zweiten Bügel erzielen.

Mit Vorteil ist der untergeordnete Bügel mit einem Ende des übergeordneten Bügels verbunden. In dieser Weise wird eine verhältnismäßig große Spannweite des Wischblatts erzielt, da der untergeordnete Bügel vorzugsweise waageblakenartig mit dem entsprechenden Ende des übergeordneten Bügels verbunden werden kann. Hierbei handelt es sich bei dem untergeordneten Bügel vorzugsweise um denjenigen Bügel, welcher das Wischelement hält.

Vorzugsweise ist der Gelenkvorsprung Teil des Gelenkstücks und wird die Drehverbindung zwischen dem Gelenkstück und dem zweiten Bügel durch Einrasten des Gelenkvorsprungs in einer Aufnahme des zweiten Bügels erhalten. Aufgrund der vorgesehenen Elastizität des Gelenkstücks im Bereich des Gelenkvorsprungs ist es besonders günstig, die Drehverbindung mittels Einrasten des Gelenkvorsprungs in eine geeignet ausgebildete Aufnahme herzustellen. Da das Gelenkstück aus einem elastisch biegbaren Material, vorzugsweise aus Kunststoff, und die zwei Bügel vorzugsweise aus Metall hergestellt sind, bietet es sich aus fertigungstechnischen Gründen an, verhältnismäßig komplizierte Strukturierungen, wie zum Beispiel der Gelenkvorsprung, am Gelenkstück vorzusehen und relativ einfach zu realisierende. Ausnehmungen, wie zum Beispiel die Aufnahme, an dem entsprechenden Bügel vorzusehen.

Entsprechend einer bevorzugten Ausführungsform ist das Rastmittel als elastisch bewegbarer Rastzahn am freien Ende eines Schenkels des U-förmigen Gelenkstücks ausgebildet und ragt in eine Ausnehmung des ersten Bügels. Auch für das als Rastzahn ausgebildete Rastmittel gilt, daß es aus fertigungstechnischen Gründen vorzugsweise am Gelenkstück vorzusehen ist und die geeignet ausgebildete Ausnehmung, welche als Gegenrastmittel dient, am entsprechenden Bügel vorzusehen.

Vorteilhafterweise ist der Schenkel zur Befestigung des Gelenkstücks an dem ersten Bügel entgegen einer in die Ausnehmung weisende Einrastrichtung des Rastzahns elastisch bewegbar. Durch die elastische Bewegbarkeit des Rastzahn wird eine montagefreundliche Herstellung einer Einrastverbindung zwischen Gelenkstück und erstem Bügel ermöglicht. Der Rastzahn ist somit in der Lage, bei geeigneter Positionierung des Gelenkstücks in Bezug auf den ersten Bügel automatisch in die geeignet ausgebildete Ausnehmung einzurasten.

Vorzugsweise ist der Rastzahn nach Befestigung des Gelenkstücks an den ersten Bügel in die in die Ausnehmung weisende Einrastrichtung gegen eine elastische Rückstellkraft bewegbar. Durch die elastische Bewegbarkeit des Rastzahns in die Einrastrichtung nach der erfolgten Befestigung des Gelenkstücks an dem ersten Bügel wird die elastische Bewegbarkeit des Gelenkstücks im Bereich des Gelenkvorsprungs zur Herstellung der Drehverbindung des Gelenkstücks mit dem zweiten Bügel begünstigt. Somit ist eine elastische Bewegung beziehungsweise Verformung des Gelenkstücks im Bereich des Gelenkvorsprungs in Richtung des Spalts zwischen dem Gelenkstück und dem ersten Bügel zur Herstellung der Drehverbindung ohne Behinderung des Rastzahns möglich, da sich auch dieser in die gleiche, den Spalt verkleinernde Richtung (Einrastrichtung des Rastzahns) elastisch bewegen läßt.

Entsprechend einer bevorzugten Ausführungsform verläuft die Einrastrichtung des Rastzahns entgegengesetzt zu einer Einrastrichtung des Gelenkvorsprungs. Da die Einrastrichtungen des Rastzahns und des Gelenkvorsprungs einander entgegengesetzt sind, ist es möglich, sowohl den Rastzahn als auch den Gelenkvorsprung am Gelenkstück auszubilden, wobei der Rastzahn vorzugsweise auf einer der zwei Flächen (Innenfläche, Außenfläche) eines Schenkels des U-förmigen Gelenkstücks und der Gelenkvorsprung auf der anderen Fläche desselben Schenkels des U-förmigen Gelenkstücks vorgesehen ist.

Mit Vorteil ist die elastische Bewegung des Rastzahns in dessen Einrastrichtung durch die Tiefe des Spalts begrenzt. Durch eine derartige Begrenzung der elastischen Bewegung des Rastzahns auf die Tiefe des Spalts zwischen dem Gelenkstück im Bereich des Gelenkvorsprungs und dem ersten Bügel wird vermieden, daß das elastisch biegbare Gelenkstück einer zu großen, eventuell materialschädigenden Verformung bei der Herstellung der Drehverbindung, das heißt beim Montieren des zweiten Bügels an das Gelenkstück, ausgesetzt wird.

Vorteilhafterweise ist die Tiefe des Spalts wenigstens gleich groß wie die in der Aufnahme sich erstreckende Länge des Gelenkvorsprungs. Da der Spalt zwischen dem Gelenkstück und dem ersten Bügel eine elastische Bewegung des Gelenkstücks, nach dessen Befestigung mit dem ersten Bügel, im Bereich des Gelenkvorsprungs erlaubt, muß die Tiefe des Spalts wenigstens die Größe der sich in die Aufnahme erstreckenden Länge des Gelenkvorsprungs aufweisen. In dieser Weise wird vermieden, daß bei der Herstellung der Drehverbindung zwischen dem Gelenkstück und dem zweiten Bügel aufgrund der elastischen, spaltmindernden Verformung des entsprechenden Schenkels des U-förmigen Gelenkstücks einer eventuell materialschädigende Kollision beziehungsweise Druckbeanspruchung der gegenüberliegenden Schenkel des ersten Bügels und des Gelenkstücks auftritt.

Gemäß einer weiteren Ausführungsform steht der zweite Bügel nach der Herstellung der Drehverbindung mit einer Rückseite des Rastzahns in Berührungskontakt. Durch den Berührungskontakt des zweiten Bügels mit der Rückseite des Rastzahns nach der Herstellung der Drehverbindung wird vorteilhafterweise ein unerwünschtes Austreten des Rastzahns aus der Aufnahme des ersten Bügels verhindert. Es wird somit in zuverlässiger Weise gewährleistet, daß es zu keinem unerlaubten Lösen des Gelenkstücks vom ersten Bügel kommt. Der montierte zweite Bügel dient deshalb vorteilhafterweise als Sicherung in Bezug auf die Rastverbindung zwischen Gelenkteil und erstem Bügel.

Vorteilhafterweise schirmt der zweite Bügel nach der Herstellung der Drehverbindung den Rastzahn an seiner Rückseite ab. Durch die vollständige Abschirmung der Rückseite des Rastzahns durch den zweiten Bügel wird der Rastzahn vor eventuellen materialschädigenden Außeneinflüssen geschützt und gleichzeitig in zuverlässiger Weise in Einrastposition gehalten.

Gemäß einer ersten Ausführungsform ist der erste Bügel als untergeordneter Bügel und der zweite Bügel als übergeordneter Bügel ausgebildet. In diesem Fall tritt der Rastzahn des Gelenkteils in eine Ausnehmung des untergeordneten, innen positionierten Bügel und der Gelenkvorsprung des Gelenkteils in eine Aufnahme des übergeordneten, äußeren Bügels ein. Es erfolgt somit zunächst eine Befestigung des Gelenkteils mittels Herstellung einer Rastverbindung mit dem untergeordneten Bügel, in dem das U-förmige Gelenkteil auf den untergeordneten Bügel aufgeschoben wird. Anschließend wird der übergeordnete Bügel zur Herstellung der Drehverbindung auf das zuvor mit dem untergeordneten Bügel befestigte Gelenkteil derart aufgeschoben, daß der Gelenkvorsprung des Gelenkteils in die entsprechende Aufnahme des übergeordneten Bügels einrastet.

Gemäß einer zweiten alternativen Ausführungsform ist der erste Bügel als übergeordneter Bügel und der zweite Bügel als untergeordneter Bügel ausgebildet. Bei dieser Ausführungsform wird das Gelenkteil zunächst in den U-förmigen, übergeordneten Bügel zur Herstellung der Rastverbindung durch Einrasten des Rastzahns in die entsprechende Ausnehmung eingeschoben. Anschließend wird der untergeordnete Bügel in das bereits befestigte, ebenfalls U-förmige Gelenkteil eingeschoben zur Herstellung der Drehverbindung mittels Einrasten des Gelenkvorsprungs in die entsprechende Aufnahme.

Vorzugsweise ist der untergeordnete Bügel U-förmig ausgebildet. Durch die U-förmige Ausbildung des untergeordneten Bügels wird unter Gewährleistung der notwendigen Stabilität der Verbindung der zwei Bügel eine vorteilhafte Material- und Gewichtseinsparung des untergeordneten Bügels erzielt.

Vorteilhafterweise weist das U-förmige Gelenkstück an jedem seiner zwei Schenkel einen Rastzahn und einen Gelenkvorsprung auf. Hierdurch wird eine effektive, zuverlässige und symmetrische Verbindung des untergeordneten Bügels mit dem übergeordneten Bügel unter Zwischenschaltung des Gelenkteils ermöglicht. Mit Vorteil ist die Aufnahme als eine nach der Herstellung der Drehverbindung von außen zugängliche Durchgangsbohrung ausgebildet. Hierdurch wird ermöglicht, daß der zweite Bügel in verhältnismäßig einfacher weise vom Gelenkteil abmontiert werden kann, in dem der Gelenkvorsprung von außen durch die Aufnahme hindurch in Richtung Spalt gedrückt wird, wodurch eine elastische, die Aufnahme freigebende Bewegung des entsprechenden Schenkels des U-förmigen Gelenkteils erzielt wird. Dabei wird bei Vorsehung von jeweils einer Drehverbindung an jedem der zwei Schenkel des U-förmigen Gelenkteils ein ungewolltes, zufälliges Ablösen des zweiten Bügels praktisch ausgeschlossen.

Beim Zusammenbaus des Wischblatts ergeben sich folgende Verfahrensschritte:
- Gegenseitiges Ineinanderschieben des ersten der zwei Bügel und des Gelenkstücks;
- Befestigen des Gelenkstücks an dem ersten Bügel mittels des wenigstens einen Rastmittels zur Herstellung einer Rastverbindung;
- gegenseitiges Ineinanderschieben des zweiten Bügels der zwei Bügel und des befestigten Gelenkstücks;
- Verbinden des befestigten Gelenkstücks mit dem zweiten Bügel mittels des wenigstens einen elastisch bewegbaren Gelenkvorsprungs zur Herstellung einer drehbaren Gelenkverbindung.

Dieses Verfahren zur Herstellung einer drehbaren Verbindung zwischen einem übergeordneten und einem untergeordneten beziehungsweise ersten und zweiten Bügel eines Wischblatts mittels Zwischenanordnung eines elastisch biegbaren Gelenkstücks ist durch eine besonders einfache, zuverlässige und schnelle Montage der drei Konstruktionselemente gekennzeichnet. Ferner muß beim Verbinden des zweiten Bügels mit dem befestigten Gelenkstück keine besondere, nachteilhafterweise genau einzuhaltende Montagestellung eingehalten werden, um ein Einrasten des Gelenkvorsprungs in eine entsprechende Aufnahme des zweiten Bügels zu gewährleisten.

Weitere vorteilhafte Ausgestaltungen der Erfindung ergeben sich aus der Beschreibung.

### Zeichnungen

Die Erfindung wird nachfolgend in mehreren Ausführungsbeispielen anhand zugehöriger Zeichnungen näher erläutert. Es zeigen:
- Figur 1: eine schematische Seitenansicht eines Abschnitts eines untergeordneten Bügels eines Wischblatts,
- Figur 2: eine schematische Seitenansicht des mit einem Gelenkteil befestigten, untergeordneten Bügels gemäß Figur 1;
- Figur 3: eine schematische Seitenansicht des mit einem übergeordneten Bügel verbundenen, befestigten Gelenkteils gemäß Figur 2;
- Figur 4: einen schematischen Längsschnitt entlang der Linie A-A gemäß Figur 3;
- Figur 5: einen schematischen Querschnitt entlang der Linie B-B gemäß Figur 4;
- Figur 6: einen schematischen Querschnitt einer weiteren Ausführungsform der drehbaren Verbindung zwischen einem übergeordneten und einem untergeordneten Bügel und
- Figur 7: eine schematische Seitenansicht eines an einer im Schnitt dargestellten Scheibe angelegten Wischblatts.

### Beschreibung der Erfindung

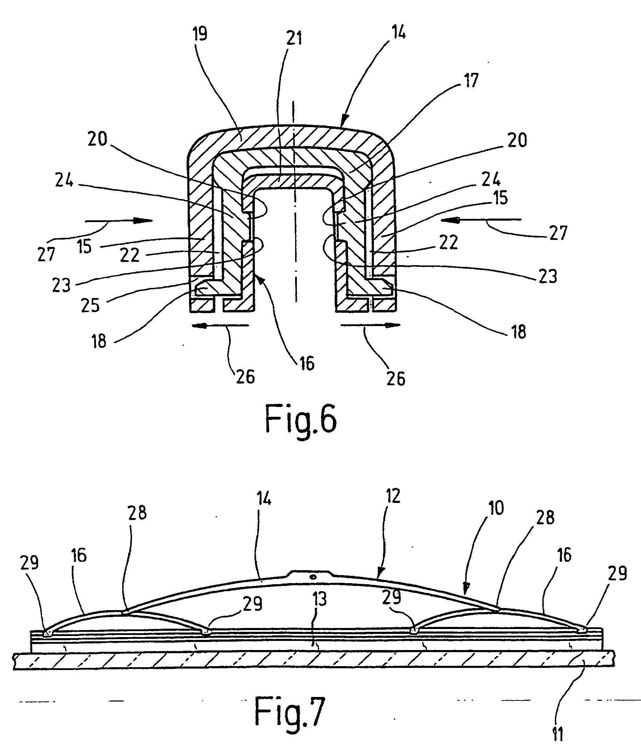

Figur 7 zeigt ein allgemein mit 10 bezeichnetes Wischblatt für eine Scheibe 11 eines Fahrzeugs (nicht dargestellt), wobei das Wischblatt 10 ein mehrgliedriges Gestell 12 aufweist, an welchem ein auf der Scheibe 11 anlegbares Wischelement 13 gehalten ist. Das Gestell 12 enthält einen übergeordneten, im Querschnitt im wesentlichen U-förmigen Bügel 14, an dessen beiden Enden 28 ein jeweiliger untergeordneter Bügel 16 befestigt ist. Jedes der zwei untergeordneten Bügel 16 hält an seinen beiden Enden mittels krallenartiger Fortsätze 29 das Wischelement 13 des Wischblatts 10. Die krallenartigen Fortsätze 29 sind an sich bekannt und deshalb hier nicht im Detail dargestellt.

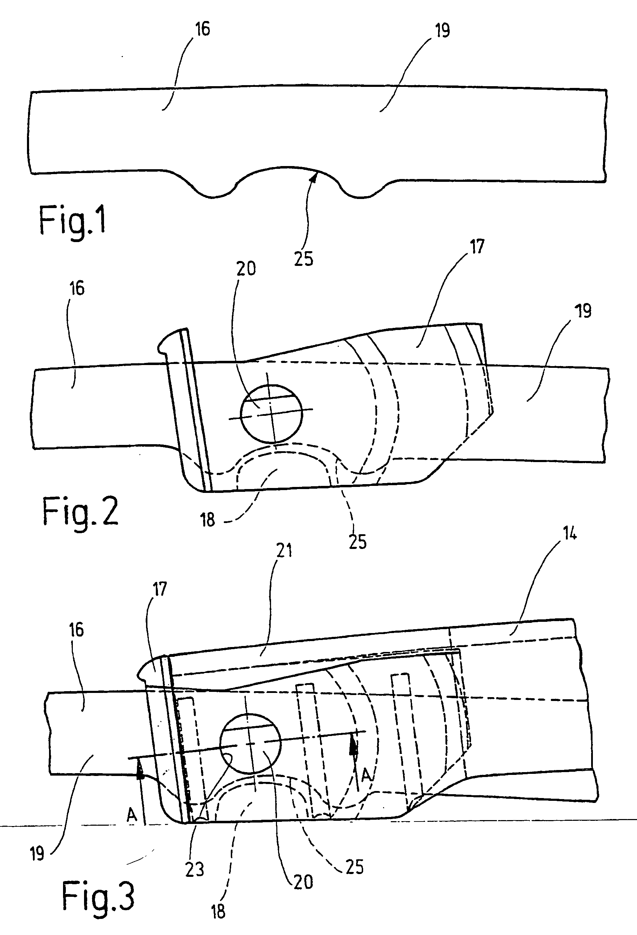

Eine erste Ausführungsform des Wischblatts 10 und insbesondere der Verbindung zwischen dem übergeordneten Bügel 14 und einem der untergeordneten Bügel 16 wird im folgenden anhand der Figuren 1 bis 5 beschrieben. Die Verbindung des übergeordneten Bügels 14 mit dem untergeordneten Bügel 16 erfolgt durch Zwischenanordnung eines elastisch biegbaren, U-förmigen Gelenkstücks 17. Figur 2 zeigt ein derartiges Gelenkstück 17, welches auf den in diesem Falle ebenfalls U-förmig ausgebildeten, untergeordneten Bügel 16 (siehe Figur 1) aufgeschoben ist. Das elastisch biegbare Gelenkstück 17 ist mit als Rastzahn ausgebildeten Rastmitteln 18 versehen, welche bei korrekter Positionierung des Gelenkstücks 17 in entsprechend geformte Ausnehmungen 25 des untergeordneten Bügels 16 einrasten. Das Gelenkstück 17 ist mit einem Gelenkvorsprung 20 versehen, mittels welchem der untergeordnete Bügel 16 zusammen mit dem befestigten Gelenkstück 17 (siehe Figur 2) mit dem übergeordneten Bügel 14 drehbar verbunden werden kann (siehe Figur 3, 4 und 5).

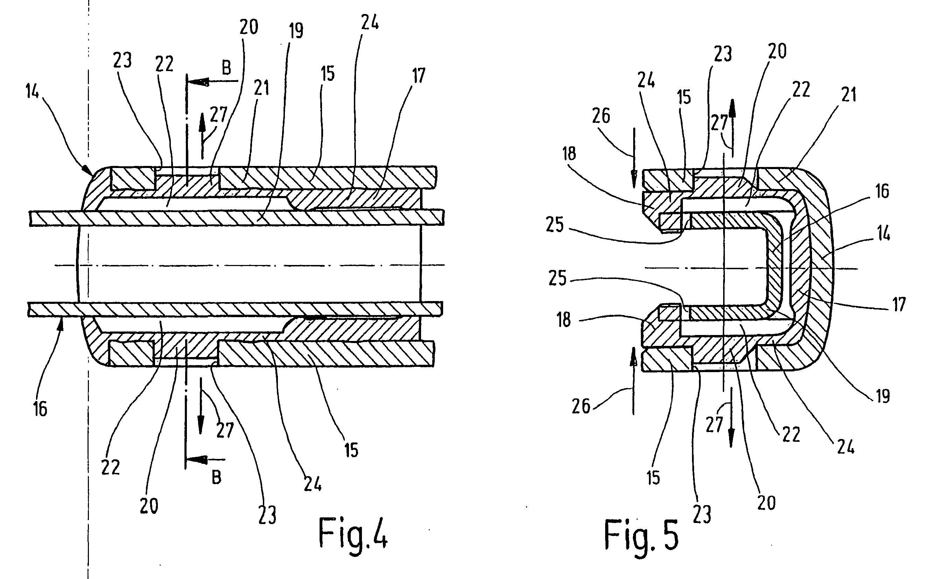

Zur Herstellung der Drehverbindung des Gelenkstücks 17 mit dem übergeordneten Bügel 14 weist letzterer eine geeignet ausgebildete Aufnahme 23 auf, in welche der Gelenkvorsprung 20 bei korrekter Positionierung des befestigten Gelenkstücks 17, auf welches der übergeordnete Bügel 14 aufgeschoben wird, elastisch einrastet. Wie insbesondere aus den Figuren 4 und 5 hervorgeht, ist das Gelenkstück 17 nach dessen Befestigung an dem untergeordneten Bügel 16 im Bereich des Gelenkvorsprungs 20 elastisch nach innen, das heißt entgegen einer Einrastrichtung 27 des jeweiligen Gelenkvorsprungs 20, bewegbar zur Herstellung der Drehverbindung des Gelenkstücks 17 mit dem übergeordneten Bügel 14.

Um eine ausreichende Elastizität des Gelenkstücks 17 sowohl zur Befestigung des Gelenkstücks 17 am untergeordneten Bügel 16 als auch zur Verbindung desselben mit dem übergeordneten Bügel 14 zu erhalten, ist das Gelenkstück 17 aus einem geeigneten Material, wie zum Beispiel Kunststoff, hergestellt. Somit weisen die zwei Schenkel 24 des U-förmig ausgestalteten Gelenkstücks 17 die notwendige Elastizität auf, um eine korrekte und einfache Befestigung des Gelenkstücks 17 an dem untergeordneten Bügel 16 und eine sichere Verbindung mit dem übergeordneten Bügel 14 unter elastischem Aufspreizen beziehungsweise Zusammendrücken der zwei Schenkel 24 zu gewährleisten. Das als elastisch bewegbarer Rastzahn ausgebildete. Rastmittel 18 des Gelenkstücks 17 ist an einem freien Ende des entsprechenden Schenkels 24 des U-förmigen Gelenkstücks 17 angeordnet, während der jeweilige Gelenkvorsprung 20 in Bezug auf den zugehörigen Schenkel 24 im wesentlichen mittig angeordnet ist.

Die als Rastzähne ausgebildeten Rastmittel 18 erstrecken sich nach innen und ragen in die entsprechende Ausnehmung 25 des untergeordneten Bügels 16, während die Gelenkvorsprünge 20 des Gelenkstücks 17 sich nach außen hin erstrecken und in die entsprechende Aufnahme des übergeordneten Bügels 14 ragen. Somit sind die Einrastrichtungen 26 und 27 der jeweiligen Schenkel 24 des Gelenkstücks 17 zueinander entgegengesetzt. Ferner sind die Einrastrichtung 26 des Rastmittels 18 und die Einrastrichtung 27 des Gelenkvorsprungs 20 eines jeden Schenkels 24 des Gelenkstücks 17 zueinander entgegengesetzt.

Wie aus Figur 5 anschaulich hervorgeht, wird die elastische Bewegung des Rastzahns beziehungsweise des Rastmittels 18 in dessen Einrastrichtung 26 durch die Tiefe des Spalts 22 begrenzt. Aus diesem Grunde muß die Tiefe des Spalts 22 wenigstens gleich groß sein wie die in der Aufnahme 23 sich erstreckende Länge des Gelenkvorsprungs 20. Der jeweilige Schenkel des U-förmigen, übergeordneten Bügels 14 steht nach der Herstellung der Drehverbindung mit einer Rückseite des entsprechenden Schenkels 24, und insbesondere des Rastzahns in Berührungskontakt. Im vorliegenden Fall wird die Rückseite des jeweiligen Rastzahns durch den entsprechenden Schenkel des U-förmigen, übergeordneten Bügels 14 vollständig abgeschirmt. Dagegen ist der Gelenkvorsprung 20 des Gelenkstücks 17 auch nach Montage des übergeordneten Bügels 14 mit dem untergeordneten Bügel 16 unter Zwischenanordnung des Gelenkstücks 17 von außen zugänglich, da der Gelenkvorsprung 20 in eine als Durchgangsbohrung ausgebildete Aufnahme 23 des übergeordneten Bügels 14 ragt.

Beim ersten Ausführungsbeispiel gemäß den Figuren 1 bis 5 wird zunächst eine Befestigung des Gelenkstücks 17 am untergeordneten Bügel 16 mittels der Rastmittel 18 geschaffen. Erst nach Fertigstellung dieser Befestigung zwischen Gelenkstück 17 und untergeordnetem Bügel 16 erfolgt die Herstellung der Drehverbindung des Gelenkstücks 17 mit dem übergeordneten Bügel 14 mittels der Gelenkvorsprünge 20. Im ersten Ausführungsbeispiel wird das Gelenkstück 17 somit an einem als untergeordneter Bügel 16 ausgebildeten ersten Bügel 19 befestigt und anschließend mit einem als übergeordneter Bügel 14 ausgebildeten zweiten Bügel 21 drehbar verbunden.

In Figur 6 ist ein zweites Ausführungsbeispiel dargestellt, in welchem der erste Bügel 19 als übergeordneter Bügel 14 und der zweite Bügel 21 als untergeordneter Bügel 16 ausgebildet sind. Es handelt sich somit um eine konstruktive Umkehr des Befestigungs- beziehungsweise Verbindungsmechanismus der ersten Ausführungsform gemäß den Figuren 1 bis 5. Die Montage und die Funktionsweise der Baugruppe entsprechend Figur 6 (zweite Ausführungsform) entspricht im wesentlichen derjenigen der Baugruppe gemäß Figur 5 (erste Ausführungsform). Die zwei Ausführungsformen gemäß den Figuren 5 und 6 unterscheiden sich jedoch darin, daß die Ausnehmungen 25 statt am untergeordneten Bügel 16 (erste Ausführungsform gemäß Figur 5) am übergeordneten Bügel 14 (zweite Ausführungsform gemäß Figur 6) vorgesehen sind, während die Aufnahmen 23 statt am übergeordneten Bügel 14 (erste Ausführungsform gemäß Figur 5) am untergeordneten Bügel 16 (zweite Ausführungsform gemäß Figur 6) vorgesehen sind.

Bei der zweiten Ausführungsform gemäß Figur 6 wird somit das Gelenkstück 17 zunächst an dem übergeordneten Bügel 14 (erster Bügel 19) befestigt, in dem das Gelenkstück 17 in den U-förmigen, übergeordneten Bügel 19 unter Einrasten der Rastmittel 18 in die entsprechende Ausnehmung 25 hineingeschoben wird. Dabei werden während des Hineinschiebens des Gelenkstücks 17 in den übergeordneten Bügel 14 die Schenkel 24 des Gelenkstücks 17 elastisch aufeinander zubewegt. Erst nach Einrasten der als Rastzähne ausgebildeten Rastmittel 18 in die entsprechende Ausnehmung 25 des übergeordneten Bügels 14 nehmen die Schenkel 24 des Gelenkstücks 17 aufgrund der sich einstellenden elastischen Rückstellkräfte ihre ursprüngliche, wie in Figur 6 dargestellte Ruheposition ein. Anschließend wird der untergeordnete Bügel 16 (zweiter Bügel 21) in das U-förmige Gelenkstück 17 hineingeschoben, wobei die Schenkel 24 des Gelenkstücks 17 elastisch voneinander wegbewegt werden unter Reduzierung der Tiefe des zwischen dem Gelenkstück 17 und dem übergeordneten Bügel 14 im Bereich des Gelenkvorsprungs 20 vorliegenden Spalts 22, wobei die Schenkel 24 des Gelenkstücks 17 wie der in ihre Ruheposition zurückkehren, sobald die Gelenkvorsprünge 20 in die entsprechenden Aufnahmen 23 des untergeordneten Bügels 16 einrasten. Diese zweite Einrastbewegung erfolgt automatisch infolge der sich einstellenden elastischen Rückstellkräfte des Gelenkstücks 17 während der Herstellung der Drehverbindung mit dem untergeordneten Bügel 16.

Gemäß einer nicht dargestellten, dritten Ausführungsform muß der Bügel 14 (siehe Figur 7) nicht notwendigerweise als übergeordneter Bügel entsprechend den Darstellungen der Figuren 5 und 6 ausgebildet sein, sondern es ist auch möglich, daß der in Figur 7 mit 14 bezeichnete Bügel als untergeordneter Bügel und die mit 16 bezeichneten Bügel als jeweils übergeordnete Bügel ausgebildet sind.

## Patentansprüche

1. Wischblatt für eine Scheibe eines Fahrzeugs, wobei das Wischblatt ein mehrgliedriges Gestell (12) aufweist, an dem ein auf der Scheibe anlegbares Wisch-element (13) gehalten ist, und das Gestell (12) wenigstens einen übergeordneten, im Querschnitt im wesentlichen U-förmigen Bügel (14) aufweist, wobei mit wenigstens einem von zwei Schenken (15) des übergeordneten Bügels (14) ein untergeordneter Bügel (16) unter Zwischenanordnung eines elastisch biegbaren, U-förmigen Gelenkstücks (17) verbunden ist, das mittels wenigstens eines Rastmittels (18) an einem ersten (14) der zwei Bügel (14,16) befestigt und mittels wenigstens eines Gelenkvorsprungs (20) mit dem zweiten (16) der zwei Bügel drehbar verbunden ist, wobei das Gelenkstück (17) nach dessen Befestigung an dem ersten Bügel (14) im Bereich des Gelenkvorsprungs (20) elastisch bewegbar ist zur Herstellung der Drehverbindung des Gelenkstücks (17) mit dem zweiten Bügel (16), **dadurch gekennzeichnet, dass** im Bereich des Gelenkvorsprungs (20) zwischen einem Schenkel des ersten Bügels (14,19) und einem diesem gegenüberstehenden Schenkel des Gelenkstücks (17) ein Spalt (22) ausgebildet ist.

2. Wischblatt nach Anspruch 1, **dadurch gekennzeichnet, daß** der untergeordnete Bügel (16) mit einem Ende des übergeordneten Bügels (14) verbunden ist.

3. Wischblatt nach einem der vorhergehenden Ansprüche, **dadurch gekennzeichnet, daß** der Gelenkvorsprung (20) Teil des Gelenkstücks (17) ist und die Drehverbindung zwischen dem Gelenkstück (17) und dem zweiten Bügel (21) durch Einrasten des Gelenkvorsprungs (20) in einer Aufnahme (23) des zweiten Bügels (21) erhalten wird.

4. Wischblatt nach einem der vorhergehenden Ansprüche, **dadurch gekennzeichnet, daß** das Rastmittel (18) als elastisch bewegbarer Rastzahn am freien Ende eines Schenkels (24) des U-förmigen Gelenkstücks (17) ausgebildet ist und in eine Ausnehmung (25) des ersten Bügels (19) ragt.

5. Wischblatt nach einem der vorhergehenden Ansprüche, **dadurch gekennzeichnet, daß** der Schenkel (24) zur Befestigung des Gelenkstücks (17) an den ersten Bügel (19) entgegen einer in die Ausnehmung (25) weisende Einrastrichtung (26) des Rastzahns elastisch bewegbar ist.

6. Wischblatt nach einem der vorhergehenden Ansprüche, **dadurch gekennzeichnet, daß** der Rastzahn nach Befestigung des Gelenkstücks (17) an den ersten Bügel (19) in die in die Ausnehmung (25) weisende Einrastrichtung (26) gegen eine elastische Rückstellkraft bewegbar ist.

7. Wischblatt nach einem der vorhergehenden Ansprüche, **dadurch gekennzeichnet, daß** die Einrastrichtung (26) des Rastzahns entgegengesetzt zu einer Einrastrichtung (27) des Gelenkvorsprungs (20) verläuft.

8. Wischblatt nach einem der vorhergehenden Ansprüche, **dadurch gekennzeichnet, daß** die elastische Bewegung des Rastzahns in dessen Einrastrichtung (26) durch die Tiefe des Spalts (22) begrenzt ist.

9. Wischblatt nach einem der vorhergehenden Ansprüche, **dadurch gekennzeichnet, daß** die Tiefe des Spalts (22) wenigstens gleich groß ist wie die in der Aufnahme (23) sich erstreckende Lange des Gelenkvorsprungs (20).

10. Wischblatt nach einem der vorhergehenden Ansprüche, **dadurch gekennzeichnet, daß** der zweite Bügel (21) nach der Herstellung der Drehverbindung mit einer Rückseite des Rastzahns in Berührungskontakt steht.

11. Wischblatt nach einem der vorhergehenden Ansprüche, **dadurch gekennzeichnet, daß** der zweite Bügel (21) nach der Herstellung der Drehverbindung den Rastzahn an seiner Rückseite abschirmt.

12. Wischblatt nach einem der vorhergehenden Ansprüche, **dadurch gekennzeichnet, daß** der erste Bügel (19) als untergeordneter Bügel (16) und der zweite Bügel (21) als übergeordneter Bügel (14) ausgebildet ist.

13. wischblatt nach einem der vorhergehenden Ansprüche, **dadurch gekennzeichnet, daß** der erste Bügel (19) als übergeordneter Bügel (14) und der zweite Bügel (21) als untergeordneter Bügel (16) ausgebildet ist.

14. Wischblatt nach einem der vorhergehenden Ansprüche, **dadurch gekennzeichnet, daß** der untergeordnete Bügel (16) U-förmig ausgebildet ist.

15. Wischblatt nach einem der vorhergehenden Ansprüche, **dadurch gekennzeichnet, daß** das U-förmige Gelenkstück (17) an jedem seiner zwei Schenkel (24) einen Rastzahn und einen Gelenkvorsprung (20) aufweist.

16. Wischblatt nach einem der vorhergehenden Ansprüche, **dadurch gekennzeichnet, daß** die Aufnahme (23) als eine nach der Herstellung der Drehverbindung von außen zugängliche Durchgangsbohrung ausgebildet ist.

17. Verfahren zur Herstellung einer drehbaren Verbindung zwischen einem übergeordneten, U-förmigen Bügel (14,19) und einem untergeordneten Bügel (16,21) eines Wischblatts nach einem der vorhergehenden Ansprüche **gekennzeichnet durch** folgende Verfahrensschritte:
- Gegenseitiges Ineinanderschieben des ersten (19) der zwei Bügel (14,16) und des Gelenkstücks (17);
- Befestigen des Gelenkstücks (17) an dem ersten Bügel (19) mittels des wenigstens einen Rastmittels (18) zur Herstellung einer Rastverbindung;
- gegenseitiges Ineinanderschieben des zweiten Bügels (21) der zwei Bügel (19,16) und des befestigten Gelenkstücks (17); Verbinden des befestigten Gelenkstücks (17) mit dem zweiten Bügel (21) mittels des wenigstens einen elastisch bewegbaren Gelenkvorsprungs (20) zur Herstellung einer drehbaren Gelenkverbindung.

## Claims

1. Wiper blade for a glass pane of a motor vehicle, the wiper blade having a multi-section frame (12) on which a wiper element (13) which can be placed on the glass pane is held, and the frame (12) having at least one main clip (14) which is essentially U-shaped in cross section, a secondary clip (16) being connected to at least one of two limbs (15) of the main clip (14) with an elastically flexible, U-shaped hinge element (17) being arranged in between, which hinge element is fastened to a first (14) of the two clips (14, 16) by means of at least one latching means (18) and is connected rotatably to the second (16) of the two clips by means of at least one hinge projection (20), the hinge element (17), after being fastened to the first clip (14), being elastically movable in the region of the hinge projection (20) in order to produce the rotary connection of the hinge element (17) to the second clip (16), **characterized in that** a gap (22) is formed in the region of the hinge projection (20) between a limb of the first clip (14,19) and an opposite limb of the hinge element (17).

2. Wiper blade according to Claim 1, **characterized in that** the secondary clip (16) is connected to one end of the main clip (14).

3. Wiper blade according to one of the preceding claims, **characterized in that** the hinge projection (20) is part of the hinge element (17), and the rotary connection between the hinge element (17) and the second clip (21) is obtained by latching the hinge projection (20) into a receptacle (23) of the second clip (21).

4. Wiper blade according to one of the preceding claims, **characterized in that** the latching means (18) is designed as an elastically movable latching tooth at the free end of one limb (24) of the U-shaped hinge element (17) and projects into a recess (25) of the first clip (19).

5. Wiper blade according to one of the preceding claims, **characterized in that** the limb (24) is elastically movable counter to a latching-in direction (26) of the latching tooth, which latching-in direction points into the recess (25), in order to fasten the hinge element (17) to the first clip (19).

6. Wiper blade according to one of the preceding claims, **characterized in that**, after the hinge element (17) is fastened to the first clip (19), the latching tooth is movable counter to an elastic restoring force in the latching-in direction (26), which points into the recess (25).

7. Wiper blade according to one of the preceding claims, **characterized in that** the latching-in direction (26) of the latching tooth runs in an opposed manner to a latching-in direction (27) of the hinge projection (20).

8. Wiper blade according to one of the preceding claims, **characterized in that** the elastic movement of the latching tooth in its latching-in direction (26) is limited by the depth of the gap (22).

9. Wiper blade according to one of the preceding claims, **characterized in that** the depth of the gap (22) is at least equal in size to that length of the hinge projection (20) which extends into the receptacle (23).

10. Wiper blade according to one of the preceding claims, **characterized in that**, after the rotary connection is produced, the second clip (21) is in touching contact with a rear side of the latching tooth.

11. Wiper blade according to one of the preceding claims, **characterized in that**, after the rotary connection is produced, the second clip (21) shields the rear side of the latching tooth.

12. Wiper blade according to one of the preceding claims, **characterized in that** the first clip (19) is designed as the secondary clip (16) and the second clip (21) is designed as the main clip (14).

13. Wiper blade according to one of the preceding claims, **characterized in that** the first clip (19) is designed as the main clip (14) and the second clip (21) is designed as the secondary clip (16).

14. Wiper blade according to one of the preceding claims, **characterized in that** the secondary clip (16) is of U-shaped design.

15. Wiper blade according to one of the preceding claims, **characterized in that** the U-shaped hinge element (17) has a latching tooth and a hinge projection (20) on each of its two limbs (24).

16. Wiper blade according to one of the preceding claims, **characterized in that** the receptacle (23) is designed as a passage hole which is accessible from the outside after the rotary connection is produced.

17. Method for producing a rotatable connection between a main, U-shaped clip (14, 19) and a secondary clip (16, 21) of a wiper blade according to one of the preceding claims, **characterized by** the following method steps:
- mutually pushing the first (19) of the two clips (14, 16) and the hinge elements (17) into each other;
- fastening the hinge element (17) to the first clip (19) by means of the at least one latching means (18) to produce a latching connection;
- mutually pushing the second clip (21) of the two clips (14, 16) and the fastened hinge element (17) into each other;
- connecting the fastened hinge element (17) to the second clip (21) by means of the at least one elastically movable hinge projection (20) to produce a rotatable hinge connection.

## Revendications

1. Balai d'essuie-glace de véhicule comprenant une ossature (12) à plusieurs éléments tenant une lame d'essuyage (13) appliquée contre la vitre et dans lequel
l'ossature (12) comprend un palonnier principal (14) à section principalement en forme de U,
et au moins l'une des deux branches (15) du palonnier principal (14) est reliée à un palonnier auxiliaire (16) avec interposition d'une pièce d'articulation (17) en forme de U, élastique souple, cette pièce étant fixée au premier (14) des deux palonniers (14, 16) par l'intermédiaire d'au moins un moyen d'accrochage (18) et reliée en pivotement par au moins un pivot (20) au second (16) des deux palonniers,
et après sa fixation au premier palonnier (14), la pièce d'articulation (17) est mobile élastiquement au niveau du pivot d'articulation (20) pour réaliser la liaison de pivotement entre la pièce d'articulation (17) et le second palonnier (16),
**caractérisé en ce qu'**
au niveau du pivot d'articulation (20), un intervalle (22) est prévu entre une branche du premier palonnier (14) et une branche opposée à celui-ci de la pièce d'articulation (17).

2. Balai d'essuie-glace selon la revendication 1,
**caractérisé en ce que**
le palonnier auxiliaire (16) est relié à une extrémité du palonnier principal (14).

3. Balai d'essuie-glace selon l'une des revendications précédentes,
**caractérisé en ce que**
le pivot d'articulation (20) fait partie de la pièce d'articulation (17) et la liaison pivotante entre la pièce d'articulation (17) et le second palonnier (21) se fait par l'accrochage du pivot d'articulation (20) dans un logement (23) du second palonnier (21).

4. Balai d'essuie-glace selon l'une des revendications précédentes,
**caractérisé en ce que**
le moyen d'accrochage (18) est un bec d'encliquetage mobile élastiquement prévu à l'extrémité libre d'une branche (24) de la pièce d'articulation (17) en forme de U, et ce bec vient dans une cavité (25) du premier palonnier (19).

5. Balai d'essuie-glace selon l'une des revendications précédentes,
**caractérisé en ce que**
pour la fixation de la pièce d'articulation (17) au premier palonnier (19), la branche (24) s'écarte élastiquement dans le sens opposé à la direction d'encliquetage (26) dirigée vers la cavité (25).

6. Balai d'essuie-glace selon l'une quelconque des revendications précédentes,
**caractérisé en ce qu'**
après avoir fixé la pièce d'articulation (17) au premier palonnier (19), le bec d'encliquetage est déplacé dans la direction d'encliquetage (26) dirigée vers la cavité (25) contre la force de rappel élastique.

7. Balai d'essuie-glace selon l'une quelconque des revendications précédentes,
**caractérisé en ce que**
la direction d'encliquetage (26) du bec d'encliquetage est opposée à la direction d'encliquetage (27) du pivot d'articulation (20).

8. Balai d'essuie-glace selon l'une quelconque des revendications précédentes,
**caractérisé en ce que**
le mouvement élastique du bec d'encliquetage dans la direction d'encliquetage (26) est limité par la profondeur de l'intervalle (22).

9. Balai d'essuie-glace selon l'une quelconque des revendications précédentes,
**caractérisé en ce que**
la profondeur de l'intervalle (22) est au moins égale à la longueur du pivot d'articulation (20) qui vient dans le logement (23).

10. Balai d'essuie-glace selon l'une quelconque des revendications précédentes,
**caractérisé en ce qu'**
après avoir réalisé la liaison pivotante, le second palonnier (21) vient en contact par le côté arrière du bec d'encliquetage.

11. Balai d'essuie-glace selon l'une quelconque des revendications précédentes,
**caractérisé en ce qu'**
après avoir réalisé la liaison pivotante, le second palonnier (21) couvre le bec d'encliquetage par son côté arrière.

12. Balai d'essuie-glace selon l'une quelconque des revendications précédentes,
**caractérisé en ce que**
le premier palonnier (19) est un palonnier auxiliaire (16) et le second palonnier (21) est la palonnier principal (14).

13. Balai d'essuie-glace selon l'une quelconque des revendications précédentes,
**caractérisé en ce que**
le premier palonnier (19) est le palonnier principal (14) et le second palonnier (21) est le palonnier auxiliaire (16).

14. Balai d'essuie-glace selon l'une quelconque des revendications précédentes,
**caractérisé en ce que**
le palonnier auxiliaire (16) a une forme en U.

15. Balai d'essuie-glace selon l'une quelconque des revendications précédentes,
**caractérisé en ce que**
chacune des deux branches (24) de la pièce d'articulation (17) en forme de U comporte un bec d'encliquetage ainsi qu'un pivot d'articulation (20).

16. Balai d'essuie-glace selon l'une quelconque des revendications précédentes,
**caractérisé en ce que**
le logement (23) est un perçage traversant accessible de l'extérieur après réalisation de la liaison pivotante.

17. Procédé de réalisation d'une liaison pivotante entre un palonnier principal (14, 19) en forme de U et un palonnier auxiliaire (16, 21) d'un balai d'essuie-glace selon l'une des revendications précédentes,
**caractérisé en ce qu'**
- on glisse l'un dans l'autre le premier (19) des deux palonniers (14, 16) et la pièce d'articulation (17),
- on fixe la pièce d'articulation (17) au premier palonnier (19) à l'aide d'au moins un moyen d'encliquetage (18) pour réaliser une liaison encliquetée,
- on glisse l'un dans l'autre le second palonnier (21) des deux palonniers (14, 16) et la pièce d'articulation (17), fixée, et
- on relie la pièce d'articulation (17) fixée au second palonnier (21) à l'aide d'au moins un pivot d'articulation (20) mobile élastiquement pour réaliser une liaison articulée pivotante.
